# EUROPÄISCHE PATENTSCHRIFT

(11) **EP 3 077 645 B1**
(45) Veröffentlichungstag und Bekanntmachung des Hinweises auf die Patenterteilung: **21.03.2018**
(21) Anmeldenummer: 14758100.3
(22) Anmeldetag: 13.08.2014
(51) Int. Cl.: F02M 26/70, F02M 26/72, F02M 26/71, F02D 9/10, F02M 26/00, F16K 27/02, F16K 1/226, F16K 11/052

(54) **DROSSELKLAPPENSTUTZEN FÜR EINE BRENNKRAFTMASCHINE SOWIE VERFAHREN ZUR REGELUNG EINER DROSSELKLAPPE IN EINEM DROSSELKLAPPENSTUTZEN**
BUTTERFLY VALVE FOR A COMBUSTION ENGINE AND METHOD FOR THE CONTROL OF A THROTTLE VALVE
VOLET PIVOTANT POUR MOTEUR A COMBUSTION ET PROCEDE DE COMMANDE

(30) Priorität: 10.10.2013 DE 102013111215
(43) Veröffentlichungstag der Anmeldung: 12.10.2016
(73) Patentinhaber: Pierburg GmbH, 41460 Neuss (DE)
(72) Erfinder: SCHRÖDER, Thomas, 12589 Berlin (DE); UHLENDORF, Ringo, 10715 Berlin (DE); MÜNICH, Marc-Anton, 14476 Potsdam (DE)
(74) Vertreter: Patentanwälte ter Smitten Eberlein-Van Hoof Rütten Partnerschaftsgesellschaft mbB
(86) Internationale Anmeldenummer: PCT/EP2014/067347
(87) Internationale Veröffentlichungsnummer: WO 2015/051937

(56) Entgegenhaltungen:
- WO-A1-03/098026
- WO-A1-2010/034450
- FR-A1- 2 891 590
- US-B1- 6 698 717

## Beschreibung

Die Erfindung betrifft einen Drosselklappenstutzen für eine Brennkraftmaschine nach dem Oberbegriff des Anspruchs 1.

Drosselklappenstutzen mit einer darin angeordneten Drosselklappe sind bekannt und werden in Fahrzeugen zur Regelung eines Verbrennungsmotors genutzt, insbesondere wird über die Stellung der Drosselklappe in dem Drosselklappenstutzen die Luftzufuhr des Verbrennungsmotors geregelt.

Aus der EP 1 063 404 B1 ist beispielsweise ein Drosselklappenstutzen mit einer runden Drosselklappe bekannt, bei dem die Drosselklappe in einer Schließposition an einer elliptischen Kontur der Innenfläche des Hauptkanals anliegen kann, so dass ein dichtes Schließen des Ansaugkanals ermöglicht ist. Derartige bekannte Drosselklappensysteme basieren auf einer Drosselung eines Saugkanals bzw. eines Saugkanalabschnitts mit lediglich einer Einlassöffnung und einer Auslassöffnung.

Darüber hinaus sind Drosselklappen mit einem absperrbaren Bypasskanal bekannt. Bei solchen Systemen zweigt ein Bypasskanal in Strömungsrichtung vor der Drosselklappe ab und mündet hinter der Drosselklappe wieder in dem Saugkanal. Der Hauptkanal und der Bypasskanal sind jeweils über eine separate Drosselklappe bzw. ein Ventil regelbar. Ein solches System ist beispielsweise in der DE 41 17 675 A1 beschrieben.

Aus der WO 2010/034450 A1 ist ein Abgasventil bekannt, das im Wesentlichen als ein 3-Wege-Ventil mit einer Ventilkammer und einer Ventilklappe ausgestattet ist. Zur Verbesserung der Dichtheit des Ventils liegt die Ventilklappe in den Sperrpositionen jeweils an einem Anschlagelement an. Solche 'frontalen' Anschlagelemente sind jedoch - aufgrund der planen Anlagefläche - in der Herstellung besonders aufwändig und kostenintensiv sowie in einem Betrieb relativ anfällig für Schmutzablagerungen, insbesondere in den Ecken des Anschlagelements.

Aus der FR 2 891 590 A1 ist ein 4-Wege-Ventil mit einer Ventilkammer und einer Ventilklappe bekannt, bei dem die Ventilklappe zur Umlenkung eines Abgasstroms zu einem Hauptauslass, einem ersten Nebenauslass und/oder einem zweiten Nebenauslass verstellbar ist. Auch hierbei sind oben genannte 'frontale Anschlagelemente' vorgesehen.

In modernen Fahrzeugen wird versucht, mehrere Ansaugkanäle untereinander zu verschalten, um eine optimale Luftzufuhr in den Verbrennungsmotor zu erzielen. Beispielsweise erfolgt die Luftzufuhr unter Verschaltung eines Abgasrückführsystems, eines Abgasturboladers, eines elektrischen Luftladers oder einer anderen geeigneten Verschaltung, Zur Verschaltung mehrerer Systeme sind jedoch zusätzliche Komponenten, wie Leitungen, Drosselklappen und Ventile erforderlich.

Hiervon ausgehend stellt sich daher die Aufgabe, einen Ansaugkanal, insbesondere einen Drosselklappenstutzen, bereitzustellen, mit dem der Bauraumbedarf bei gleichzeitiger Vereinfachung der Montage gesenkt wird. Die Kosten zur Einbindung eines zusätzlichen Ladesystems oder eines Abgasrückführsystems inklusive Leitungen und Ventile sollen dabei möglichst reduziert werden und eine hohe Flexibilität zur Anpassung an andere Motoren gegeben sein.

Diese Aufgabe wird durch einen Drosselklappenstutzen mit den Merkmalen des Hauptanspruchs 1 sowie ein entsprechendes Verfahren zur Regelung einer Drosselklappe in einem derartigen Drosselklappenstutzen mit den Merkmalen des Anspruchs 15 gelöst.

In bekannter Weise umfasst der Drosselklappenstutzen für eine Brennkraftmaschine einen von einem Fluid durchströmbaren Hauptkanal, der eine Einlassöffnung und eine Auslassöffnung aufweist. Grundsätzlich ist die Strömungsrichtung in dem Hauptkanal von der Einlassöffnung in Richtung der Auslassöffnung. Der Hauptkanal ist insbesondere rund ausgebildet und weist eine Innenwandfläche auf. In dem Hauptkanal zwischen der Einlassöffnung und der Auslassöffnung ist eine drehbar gelagerte Drosselklappenwelle mit einer Drosselklappe angeordnet. Die Drosselklappenwelle weist eine axiale Hauptachse auf, die quer zu der Hauptkanalrichtung bzw. senkrecht zu einer Mittellinie der Innenwand des Hauptkanals ausgerichtet ist. Die Drosselklappenwelle kann zentrisch oder mit einem Versatz in Bezug auf die Mittellinie der Innenwand in dem Hauptkanal angeordnet sein. Unter der Mittellinie ist eine Achse oder Linie zu verstehen, die aus einer Aneinanderreihung der Mittelpunkte der Innenwandfläche des Hauptkanals gebildet ist. Insbesondere kann die Mittellinie die neutrale Faser bzw, die Hauptkanalneutrale des Hauptkanals sein. Die Drosselklappenwelle unterteilt den Hauptkanal in einen Einlasskanal bzw. Einlasskanalabschnitt und einen Auslasskanal bzw. Auslasskanalabschnitt.

Die Drosselklappe kann als eine zylindrische Scheibe ausgebildet sein, die in einem radial äußeren Bereich eine Frontseitenkante und eine Rückseitenkante aufweist. Die Frontseitenkante ist dabei zwischen einer flächig ausgebildeten Frontseite und einer Stirnseite der Drosselklappe ausgebildet, die Rückseitenkante zwischen einer der Frontseite gegenüberliegenden flächig ausgebildeten Rückseite und der Stirnseite der Drosselklappe. Die Drosselklappe ist zentrisch mit der Drosselklappenwelle verbunden, so dass die Drosselklappenwelle die Drosselklappe in zwei gleichgroße Hälften unterteilt. Dadurch ist eine Drosselklappen-Oberhälfte und eine Drosselklappen-Unterhälfte definiert, wobei unter der Drosselklappen-Oberhälfte diejenige Hälfte der Drosselklappe zu verstehen ist, die in Richtung der Einlassöffnung des Hauptkanals bzw. in dem Einlasskanalabschnitt angeordnet ist, und unter der Drosselklappen-Unterhälfte diejenige Hälfte, die in Richtung der Auslassöffnung bzw. in dem Auslasskanalabschnitt angeordnet ist.

Zum Verschließen der Auslassöffnung ist an der Innenwandfläche des Hauptkanals eine erste Drosselklappen-Anschlageinrichtung ausgebildet, an der die Drosselklappe anliegen kann- Die Drosselklappen-Anschlageinrichtung ist eine in Bezug auf die Mittellinie des Hauptkanals, insbesondere um die Drosselklappenwellenachse, geneigte bzw. angewinkelte zylindrische Kontur in der Innenwandfläche des Hauptkanals. Diese geneigte zylindrische Kontur kann als eine schlauchförmige Einfassung zur Aufnahme der Drosselklappe angesehen werden und bildet in der Ebene des Hauptkanals bzw. in Hauptkanalrichtung betrachtet eine elliptische Form aus. Zur Vermeidung eines Verklemmens ist die erste Drosselklappen-Anschlageinrichtung, das heißt die erste geneigte zylindrische Kontur, erfindungsgemäß derart ausgebildet, dass die Drosselklappe in Richtung einer Sperrposition ohne Kontakt entlang der Kontur gedreht werden kann und in der Sperrposition mit zumindest einer Kante an einem Anschlagabschnitt der geneigten zylindrischen Kontur anliegt. Der Anschlagabschnitt der Kontur ist ein Teil der geneigten zylindrischen Kontur in der Innenwandfläche. In einer die Auslassöffnung des Hauptkanals verschließenden ersten Sperrposition liegt die Drosselklappe mit der Drosselklappen-Oberhälfte, insbesondere mit einer radial äußeren Frontseitenkante der Drosselklappen-Oberhälfte, und mit der Drosselklappen-Unterhälfte, insbesondere mit einer radial äußeren Rückseitenkante der Drosselklappen-Unterhälfte an dem Anschlagabschnitt der ersten Drosselklappen-Anschlageinrichtung an. Der Anschlagabschnitt bildet somit eine Dichtkante der geneigten zylindrischen Kontur der Innenwandfläche aus. Dadurch kann die Drosselklappe bei Anliegen an dem Anschlagabschnitt den jeweiligen Kanal möglichst dicht verschließen, insbesondere kann an der Drosselklappen-Anschlageinrichtung ein möglichst dichtes Verschließen der Auslassöffnung des Hauptkanals ermöglicht werden. Für ein Öffnen des Hauptkanals kann die Drosselklappe in eine Offenposition gedreht werden, in der die Drosselklappe vorzugsweise in Längserstreckung in der Hauptkanalrichtung angeordnet ist. Für eine Minimalöffnung des Hauptkanals kann die Drosselklappe in eine Teilsperrposition drehbar sein, in der sich die Drosselklappe in einem in Bezug auf die Mittellinie des Hauptkanals spitzen Winkel befindet. Insbesondere befindet sich die Drosselklappe in der Teilsperrposition kurz vor der ersten Sperrposition, das heißt die Drosselklappe liegt an der Drosselklappen-Anschlageinrichtung noch nicht an bzw. ist von dem Anschlagabschnitt der Drosselklappen-Anschlageinrichtung noch beabstandet.

An der Innenwandfläche des Hauptkanals ist zusätzlich eine zweite Drosselklappen-Anschlageinrichtung ausgebildet ist, an der in einer die Einlassöffnung des Hauptkanals verschließenden zweiten Sperrposition die Drosselklappen-Oberhälfte mit einer Rückseitankante und die Drosselklappen-Unterhälfte mit einer Frontseitenkante anliegt. Die Seitenkanten bilden somit jeweils eine Primärdichtkante. Das Anliegen erfolgt wiederum im radial äußeren Kantenbereich der planen Seitenfläche der Drosselscheibe, das heißt der Frontseitenkante bzw. der Rückseitenkante. Die zweite Drosselklappen-Anschlageinrichtung ist ebenfalls eine in Bezug auf die Mittellinie des Hauptkanals, insbesondere um die Drosselklappenwellenachse, geneigte bzw. angewinkelte, in der Innenwandfläche des Hauptkanals ausgebildete zylindrische Kontur. Diese zweite geneigte zylindrische Kontur kann ebenfalls als eine schlauchförmige Einfassung zur Aufnahme der Drosselklappe angesehen werden und bildet in Hauptkanalrichtung betrachtet eine elliptische Form aus. Die zweite Drosselklappen-Anschlageinrichtung, das heißt die zweite geneigte zylindrische Kontur, ist derart ausgebildet, dass die Drosselklappe in Richtung der zweiten Sperrposition entlang der Kontur gedreht und in der zweiten Sperrposition mit zumindest einer Kante an einem Anschlagabschnitt der zweiten Drosselklappen-Anschlageinrichtung anliegt. Der Anschlagabschnitt der Kontur ist ein Teil der gesamten zweiten geneigten zylindrischen Kontur in der Innenwandfläche. Die zweite Drosselklappen-Anschlageinrichtung bzw. die zweite geneigte zylindrische Kontur kann die gleiche Form aufweisen wie die gegenüberliegend und vorzugsweise spiegelverkehrt angeordnete erste Drosselklappen-Anschlageinrichtung bzw. erste geneigte zylindrische Kontur; alternativ sind die zwei geneigten zylindrischen Konturen in ihrer Form und/oder in ihrem Winkel in Bezug auf die Mittellinie des Hauptkanals unterschiedlich ausgebildet. Insbesondere kann die erste Drosselklappen-Anschlageinrichtung gegenüber der zweiten Drosselklappen-Anschlageinrichtung einen in Bezug auf die Mittellinie des Hauptkanals kleineren Winkel aufweisen.

Die beiden Drosselklappen-Anschlageinrichtungen sind in dem Hauptkanal schräg bzw. in einem spitzen Winkel in Bezug auf die Mittellinie des Hauptkanals sowie umlaufend angeordnet. Dadurch kann in beiden Sperrpositionen ein annähernd gleicher Grundluftdurchsatz erzielt werden. Die erste Drosselklappen-Anschlageinrichtung und die zweite Drosselklappen-Anschlageinrichtung kreuzen sich an zwei Stellen, vorzugsweise in einem Winkel von 120° zueinander. Die beiden Kreuzungspunkte der Drosselklappen-Anschlageinrichtungen liegen auf einer Geraden, die der Hauptachse der Drosselklappenwelle entspricht. Dadurch sind jeweils zwei Anschlagabschnitte der ersten Drosselklappen-Anschlageinrichtung und der zweiten Drosselklappen-Anschlageinrichtung definiert. Die beiden Anschlagabschnitte der Drosselklappen-Anschlageinrichtungen, die der Einlassöffnung des Hauptkanals zugewandt sind bzw. in dem Einlasskanalabschnitt liegen, bilden jeweils einen Einlass-Anschlagabschnitt, die beiden Anschlagabschnitte der Drosselklappen-Anschlageinrichtungen, die der Auslassöffnung des Hauptkanals zugewandt sind bzw. in dem Auslasskanalabschnitt liegen, bilden jeweils einen Auslass-Anschlagabschnitt. Der Einlass-Anschlagabschnitt und der Auslass-Anschlagabschnitt bilden jeweils einen Teil der geneigten zylindrischen Kontur in der Innenwandfläche des Hauptkanals. Der Einlass-Anschlagabschnitt der ersten Drosselklappen-Anschlageinrichtung und der Einlass-Anschlagabschnitts der zweiten Drosselklappen-Anschlageinrichtung sind in Richtung der Einlassöffnung ausgebildet, der Auslass-Anschlagabschnitt der ersten Drosselklappen-Anschlageinrichtung und der Auslass-Anschlagabschnitt der zweiten Drosselklappen-Anschlageinrichtung sind in Richtung der Auslassöffnung ausgebildet.

Vorzugsweise weist der Hauptkanal zusätzlich eine Nebenkanalöffnung auf, durch die ein von einem Fluid durchströmbarer Nebenkanal in den Hauptkanal mündet. Die Nebenkanalöffnung ist bevorzugt zwischen der ersten Drosselklappen-Anschlageinrichtung und der Auslassöffnung angeordnet. Der Nebenkanal kann ein Abgasrückführkanal, ein zweiter Ansaug- bzw. Frischluftzufuhrkanal, ein Kühlluftkanal oder ein beliebig anderer Kanal zur Leitung einer Fluidströmung sein. Der Nebenkanal ist insbesondere in zwei Richtungen durchströmbar, so dass die Fluidströmung des Nebenkanals in den Hauptkanal hinein oder aus dem Hauptkanal heraus führen kann.

Vorzugsweise ist die Nebenkanalöffnung in einem Seitenbereich des Hauptkanals zwischen der ersten Drosselklappen-Anschlageinrichtung und der zweiten Drosselklappen-Anschlageinrichtung angeordnet. Besonders bevorzugt mündet der Nebenkanal unmittelbar stromabwärts der Drosselklappe in ihrer ersten Sperrposition in den Hauptkanal, so dass Verwirbelungen im Zwischenraum zwischen Mündung und Drosselklappe vermieden werden können. Der Mittelpunkt der Nebenkanalöffnung liegt insbesondere in einer Geraden, die achsparallel zu der Drosselklappenwelle ist. Bei einer solchen Anordnung der Nebenkanalöffnung kann sich die Drosselklappe in der ersten Sperrposition zwischen der Auslassöffnung und der Nebenkanalöffnung und in der zweiten Sperrposition zwischen der Einlassöffnung und der Nebenkanalöffnung befinden. Dadurch kann die Drosselklappe in der Sperrposition in Verlängerung eines radial äußeren Wandabschnitts des Nebenkanals angeordnet sein, so dass die Drosselklappe als Verlängerung der rückwärtigen Wand des Nebenkanals bzw. der Umlenkwand der Nebenkanalströmung dient. Hierdurch wird eine Verwirbelung vermieden und somit der Strömungswiderstand verringert. Durch die Anordnung der beiden Drosselklappen-Anschlageinrichtungen, das heißt der beiden geneigten zylindrischen Konturen, kann zwischen diesen Drosselklappen-Anschlageinrichtungen eine sehr große Nebenkanalöffnung ausgebildet sein. Ferner kann der Drosselklappenstutzen relativ kurz und platzsparend aufgebaut sein.

Vorzugsweise ist die Nebenkanalöffnung in der ersten Sperrposition gegenüber der Auslassöffnung absperrbar und gegenüber der Einlassöffnung freigebbar und in der zweiten Sperrposition gegenüber der Einlassöffnung absperrbar und gegenüber der Auslassöffnung freigebbar. In dieser Ausgestaltung sind in den Sperrpositionen jeweils ein Durchlass einer Fluidströmung zwischen der Einlassöffnung und der Auslassöffnung absperrbar und ein Durchlass zwischen dem Nebenkanal und der Einlassöffnung oder der Auslassöffnung freigebbar. Insbesondere kann die Drosselklappe in der ersten Sperrposition die Auslassöffnung vollständig verschließen und einen Durchlass zwischen dem Nebenkanal und der Einlassöffnung freigeben, so dass ein Luftstrom aus dem Einlasskanal in den Nebenkanal geleitet wird. In einer zweiten Sperrposition ist bevorzugt die Einlassöffnung vollständig verschlossen und einen Durchlass zwischen dem Nebenkanals und der Auslassöffnung freigeben, so dass der Auslasskanal lediglich mit einem Luftstrom aus dem Nebenkanal beaufschlagt werden kann.

Vorzugsweise ist die Nebenkanalöffnung oval ausgebildet. Dadurch kann eine größtmögliche Öffnung zwischen der ersten Drosselklappen-Anschlageinrichtung und der zweite Drosselklappen-Anschlageinrichtung ausgebildet sein. Folglich kann mit einer ovalen Öffnung ein größtmöglicher Massendurchsatz durch die Nebenkanalöffnung erreicht werden. Besonders bevorzugt mündet der Nebenkanal schräg in den Hauptkanal, dass heißt in einem spitzen Winkel in Bezug auf die Mittellinie bzw. Mittelachse des Hauptkanals sowie in Bezug auf die Axialachse der Drosselwelle. Der Nebenkanal kann in Richtung der Einlassöffnung oder in Richtung der Auslassöffnung schräg in den Hauptkanal münden. Dadurch kann der aus oder in den Nebenkanal strömende Luftstrom optimal geleitet werden.

Vorzugsweise ist die Einlassöffnung in der ersten Sperrposition und in der zweiten Sperrposition gegenüber der Auslassöffnung vollständig absperrbar. Dadurch kann in der ersten Sperrposition eine Luftzufuhr in den Auslasskanal vollständig unterbrochen werden, während ein Luftstrom von dem Einlasskanal in den Nebenkanal geleitet werden kann. In der zweiten Sperrposition kann der Einlasskanal vollständig verschlossen sein, so dass der Auslaßkanal von einem Luftstrom lediglich aus dem Nebenkanal beaufschlagt werden kann.

In einer weiteren Ausgestaltung kann der Hauptkanal eine zweite Nebenkanalöffnung aufweist, durch die ein zweiter Nebenkanal in den Hauptkanal mündet. Vorzugsweise ist die zweite Nebenkanalöffnung der ersten Nebenkanalöffnung gegenüberliegend angeordnet. Besonders bevorzugt ist auch die zweite Nebenkanalöffnung in einem Seitenbereich des Hauptkanals zwischen der ersten Drosselklappen-Anschlageinrichtung und der zweiten Drosselklappen-Anschlageinrichtung angeordnet. Dadurch kann in der ersten Sperrposition der Drosselklappe ein Fluidkanal zwischen der Einlassöffnung und der ersten Nebenkanalöffnung und zwischen der Auslassöffnung und der zweiten Nebenkanalöffnung freigebbar sein, und in der zweiten Sperrposition ein Fluidkanal zwischen der Einlassöffnung und der zweiten Nebenkanalöffnung und zwischen der Auslassöffnung und der ersten Nebenkanalöffnung freigebbar sein.

Vorzugsweise ist die Drosselklappe in einer Offenposition auf der Mittellinie der Innenwandfläche des Hauptkanals angeordnet. Wie bereits oben angesprochen, ist unter der Mittellinie eine Achse oder Linie zu verstehen, die aus einer Aneinanderreihung der Mittelpunkte der Innenwandfläche des Hauptkanals gebildet ist. Insbesondere liegt in der Offenposition eine Mittelachse der Drosselklappe, die zwischen der Frontseitenfläche und der Rückseitenfläche der Drosselklappe ausgebildet ist, genau auf der Mittellinie des Hauptkanals. Dadurch kann eine optimale Durchströmung des Hauptkanals erreicht werden. Die im Hauptkanal ausgebildete Nebenkanalöffnung ist in der Offenposition gegenüber sowohl der Einlassöffnung als auch gegenüber der Auslassöffnung freigegeben.

Vorzugsweise ist die Drosselklappe kreisrund, zylindrisch und/oder plan ausgebildet. Dadurch kann die Herstellung und die Montage der Drosselklappe vereinfacht und Kosten gespart werden. Insbesondere kann die Drosselklappe 'seitenverkehrt' montiert werden. Zudem ist beim Schließen der Drosselklappe ein Verbeißen nahezu ausgeschlossen. Die rund ausgebildete Drosselklappe korrespondiert mit den in dem Hauptkanal ausgebildeten geneigten zylindrischen Konturen. Die Drosselklappe ist vorzugsweise über einen elektromotorischen Aktor betätigbar, woraus eine genaue Einstellbarkeit der Drosselklappe resultiert.

Vorzugsweise ist die Drosselklappe in einem Radius von 120° drehbar. Besonders bevorzugt ist die Drosselklappe aus der Offenposition (0°-Position) jeweils in die erste Sperrposition um 60° drehbar und in die zweite Sperrposition um -60° drehbar. Dadurch ergibt sich von der ersten Sperrposition über die Offenposition zur zweiten Sperrposition ein Gesamtarbeitswinkel von 120°. Die Drosselklappe kann natürlich auch in jedem beliebigen anderen Winkel, beispielsweise zwischen 100° und 170°, bzw. jeder anderen Position, beispielsweise der Teilsperrposition, positioniert bzw. eingestellt werden.

Vorzugsweise ist die Drosselklappe in eine erste Richtung (linksdrehend) in die erste Sperrposition und in eine entgegengesetzte zweite Richtung (rechtsdrehend) in die zweite Sperrposition drehbar. Ein 'Durchdrehen' der Klappe in eine Richtung von der ersten Sperrposition in die zweite Sperrposition ist hierbei nicht vorgesehen. Dadurch können zwei Anschlagabschnitte in dem Hauptkanal ausgebildet sein, die die Bewegungsfreiheit der Drosselklappe eingrenzen. Die Drosselklappe liegt dabei jeweils in der ersten Sperrposition mit der Frontseitenkante der Drosselklappen-Oberhälfte und mit der Rückseitenkante der Drosselklappen-Unterhälfte dem Anschlagabschnitt der ersten Drosselklappen-Anschlageinrichtung und in der zweiten Sperrposition mit der Rückseitenkante der Drosselklappen-Oberhälfte und mit der Frontseitenkante der Drosselklappen-Unterhälfte an dem Anschlagabschnitt der zweiten Drosselklappen-Anschlageinrichtung an. Durch die Anschlagabschnitte kann eine besonders gute Dichtigkeit der Sperrposition bzw. der Drosselklappe erreicht werden.

Vorzugsweise ist die Drosselklappe in einer Teiloffenposition und/oder der Sperrposition schräg bzw. unter einem spitzen Winkel in Bezug auf die Mittelline der Innenwandfläche des Hauptkanals angestellt. In der ersten Sperrposition kann die Drosselklappe unter einem ersten Winkel, in der zweiten Sperrposition unter einem zweiten Winkel in Bezug auf die Mittelline angeordnet sind. Der erste und der zweite Winkel sind vorzugsweise gleich und betragen beispielsweise 60°. Alternativ sind die Winkel unterschiedlich, wobei die Winkel von der Form der Nebenkanalöffnung abhängen können. Durch die schräge Anordnung der Drosselklappe in den Sperrpositionen kann jeweils ein sehr dichter Verschluss hergestellt werden, da eine definierte Wandberührung stattfindet. Zudem ist diese Anordnung für ein Drehen der Drosselklappe aus einer Sperrposition in die Teiloffenposition und/oder in die Offenposition besonders vorteilhaft.

Entsprechend der vorgenannten Ausgestaltung des Drosselklappenstutzens können die Drosselklappen-Anschlageinrichtungen jeweils schräg bzw. unter einem Winkel in Bezug auf die Mittellinie der Innenwandfläche des Hauptkanals ausgebildet sein. Die erste Drosselklappen-Anschlageinrichtung kann unter einem ersten Winkel, die zweite Drosselklappen-Anschlageinrichtung unter einem zweiten Winkel in Bezug auf die Mittelline angeordnet sein. Der erste Winkel und der zweite Winkel sind vorzugsweise gleich und betragen beispielsweise 60°. Besonders bevorzugt ist die erste Drosselklappen-Anschlageinrichtung im Vergleich zu der zweiten Drosselklappen-Anschlageinrichtung weniger geneigt, das heißt sie weist einen größeren Winkel in Bezug auf die Mittellinie der Innenwandfläche auf. Dadurch kann die Dichtigkeit der Drosselklappe in der ersten Sperrposition verbessert werden.

Vorzugsweise korrespondiert der Anschlagabschnitt der Drosselklappen-Anschlageinrichtung zu der Anlagekante der jeweiligen Seite der Drosselklappenhälften. Insbesondere korrespondieren die Anschlagabschnitte der ersten Drosselklappen-Anschlageinrichtung jeweils mit dem Anlagebereich bzw. mit der Frontseitenkante der Drosselklappen-Oberhälfte und der Rückseitenkante der Drosselklappen-Unterhälfte, und die Anschlagabschnitte der zweiten Drosselklappen-Anschlageinrichtung jeweils mit der Frontseitenkante der Drosselklappen-Unterhälfte und der Rückseitenkante der Drosselklappen-Oberhälfte. Dadurch kann ein besonders dichtes Verschließen des jeweiligen Hauptkanalabschnitts erreicht werden. In einer Ausgestaltung korrespondiert die zweite Drosselklappen-Anschlageinrichtung mit den jeweiligen Seitenkanten weniger als die erste Drosselklappen-Anschlageinrichtung mit den jeweiligen Seitenkanten. Dadurch kann in der zweiten Sperrposition ein im Vergleich zur ersten Sperrposition größerer Luftspalt zwischen der Drosselklappe und der Innenwandfläche ausgebildet sein und die zweite Drosselklappen-Anschlageinrichtung toleranzunempfindlicher ausgebildet sein. Dies ist insbesondere für eine einfache Herstellung der geneigten zylindrischen Kontur sowie für einen gewünschten geringen Luftstrom durch den Luftspalt vorteilhaft.

Vorzugsweise ist die in Hauptkanalrichtung verlaufende Mittellinie eine Gerade, wobei der Mittelpunkt der Drosselklappe auf dieser Geraden liegt. Besonders bevorzugt ist die Mittellinie von der Einlassöffnung bis zu der Auslassöffnung des Hauptkanals eine Gerade. Die Mittellinie ist aus einer Aneinanderreihung der Mittelpunkte der Innenwandfläche des Hauptkanals gebildet, so dass in dieser Ausgestaltung der Hauptkanal vollständig geradlinig ausgebildet ist. Die Innenwandung des Hauptkanals kann dabei zylindrisch ausgebildet und somit in relativ einfacher Weise herstellbar sein. Die in dem Hauptkanal ausgebildeten Drosselklappen-Anschlageinrichtungen bzw. die geneigten zylindrischen Konturen weisen hierbei ebenfalls Mittelpunkte auf, die auf dieser Geraden liegen.

Das erfindungsgemäße Verfahren zur Regelung einer Drosselklappe in einem Drosselklappenstutzen nach einem der voranstehenden Ansprüche, sieht vor, dass bei Abschalten der Brennkraftmaschine die Drosselklappe zur Unterbrechung eines Luftstroms in dem Auslasskanal in die erste Sperrposition gedreht wird, in der die Drosselklappen-Oberhälfte mit einer Frontseitenkante und die Drosselklappen-Unterhälfte mit einer Rückseitenkante an der ersten Drosselklappen-Anschlageinrichtung dicht anliegen, so dass die Auslassöffnung vollständig verschlossen ist und eine Fluidströmung von der Einlassöffnung zu der Nebenkanalöffnung freigegeben ist. Die Brennkraftmaschine erhält dadurch keine Luft mehr, so dass diese ohne Nachlaufen durch ungewolltes Zünden abgeschaltet werden kann. Darüber hinaus kann der durch die Einlassöffnung in den Hauptkanal einströmende Restluftstrom bzw. ein fortbestehender Luftstrom von dem Einlasskanal zu dem Nebenkanal geleitet werden, in dem der Luftstrom, beispielsweise zur Rückspülung oder zur Kühlung eines Fahrzeugaggregats, bereitgestellt werden kann.

Bei Schaltung der der Brennkraftmaschine in eine Halbschub-Position wird die Drosselklappe zur Weiterleitung eines zweiten Luftstroms in die zweite Sperrposition gedreht, in der die Drosselklappen-Oberhälfte mit einer Rückseitenkante und die Drosselklappen-Unterhälfte mit einer Frontseitenkante an der zweiten Drosselklappen-Anschlageinrichtung anliegen, so dass die Einlassöffnung verschlossen ist und eine Fluidströmung von der Nebenkanalöffnung zu der Auslassöffnung freigegeben ist. Dadurch kann ein Luftstrom von dem Nebenkanal zu dem Auslasskanal geleitet werden. Der Nebenkanal kann beispielsweise ein Bypasskanal um die Drosselklappe sein, der von einem Minimalluftstrom durchströmt wird. Dadurch kann in der zweiten Sperrposition trotz dichtem Verschluss der Einlassöffnung des Hauptkanals durch die Drosselklappe ein relativ geringer Luftstrom von dem Nebenkanal in den Auslasskanal geleitet werden. Diese Schaltposition wird beispielsweise in einem Leerlaufbetrieb der Brennkraftmaschine geschaltet. Alternativ kann ein von dem Nebenkanal bereitgestellter separater Zuluftstrom in den Auslasskanal bzw. zu der Brennkraftmaschine geleitet werden, ohne eine Zumischung des Luftstroms aus der Einlassöffnung bzw. aus dem Einlasskanal. Dieser separate bzw, zweite Luftstrom kann beispielsweise von einem separaten Verdichter oder von einem Abgasrückführsystem bereitgestellt sein. Durch ein definiertes Drehen und Positionieren der Drosselklappe aus einer der beiden Drosselklappen-Anschlageinrichtung kann ein bestimmtes vorgegebenes Mischungsverhältnis des Luftstroms von dem Einlasskanal und dem Nebenkanal an der Auslassöffnung erreicht werden.

Bei einer Schaltung der der Brennkraftmaschine in eine Vollschub-Position wird die Drosselklappe zur Weiterleitung eines ersten Luftstroms und eines zweiten Luftstroms in die Offenposition gedreht. Dadurch befinden sich die Drosselklappen-Oberhälfte und die Drosselklappen-Unterhälfte in einer Mittellinie der Innenwandfläche des Hauptkanals, so dass eine Fluidströmung sowohl von der Einlassöffnung als auch von der Nebenkanalöffnung zu der Auslassöffnung freigegeben ist. Dadurch kann beispielsweise eine durch den Drosselklappenstutzen strömende Ansaugluft für eine Brennkraftmaschine von zwei separaten Verdichtern verdichtet sein.

Es sollte deutlich sein, dass die Drosselklappe auch in jede beliebige andere Stellposition zwischen der ersten Sperrposition und der zweiten Stellposition einstellbar ist. Insbesondere kann die Drosselklappe in Abhängigkeit einer Luftmenge und/oder eines Luft-Mischungsverhältnisses in eine bestimmte Stellposition gebracht werden. Insbesondere kann die Drosselklappe in Abhängigkeit einer vorgegebenen Luftmenge und/oder eines vorgegebenen Mischungsverhältnisses der von der Einlassöffnung und der von der Nebenkanalöffnung in den Hauptkanal einströmenden und in Richtung der Auslassöffnung ausströmenden Luft eingestellt werden.

Durch diesen Drosselklappenstutzen und das entsprechende Verfahren wird erreicht, dass mit nur einer einzigen Drosselklappe nicht nur zwischen einem Durchlass einer Fluidströmung von der Nebenkanalöffnung zu der Auslassöffnung des Hauptkanals oder von der Einlassöffnung zu der Auslassöffnung des Hauptkanals umgeschaltet werden kann, sondern zusätzlich eine Regelung der Luftmenge in dem Auslasskanal ermöglicht wird. Dies ist besonders vorteilhaft, wenn der Hauptkanal als eine Ansaugleitung einer Brennkraftmaschine und der Nebenkanal als ein Abgasrückführkanal dient. Hierbei wird zusätzlich mit derselben Drosselklappe durch Anfahren der ersten Schließposition auch ein Nachlaufen des Verbrennungsmotors bei Abschalten des Motors durch Verschluss der Auslassöffnung zuverlässig verhindert. Entsprechend werden die Anzahl an Bauteilen und der Montage- und Herstellungsaufwand im Vergleich zu bekannten Ausführungen deutlich reduziert.

Ein Ausführungsbeispiel eines erfindungsgemäßen Drosselklappenstutzens ist in den Figuren dargestellt und wird nachfolgend beschrieben.
Figur 1 zeigt einen Drosselklappenstutzen in einer Offenposition in einer perspektivischen Darstellung,
Figur 2 zeigt einen Drosselklappenstutzen in einer ersten Sperrposition in einer perspektivischer Darstellung, und
Figur 3 zeigt einen Drosselklappenstutzen in einer zweiten Sperrposition in einer perspektivischen Schnittdarstellung.
Figur 4 zeigt einen Drosselklappenstutzen mit zwei Sperrpositionen in einer Schnittdarstellung.

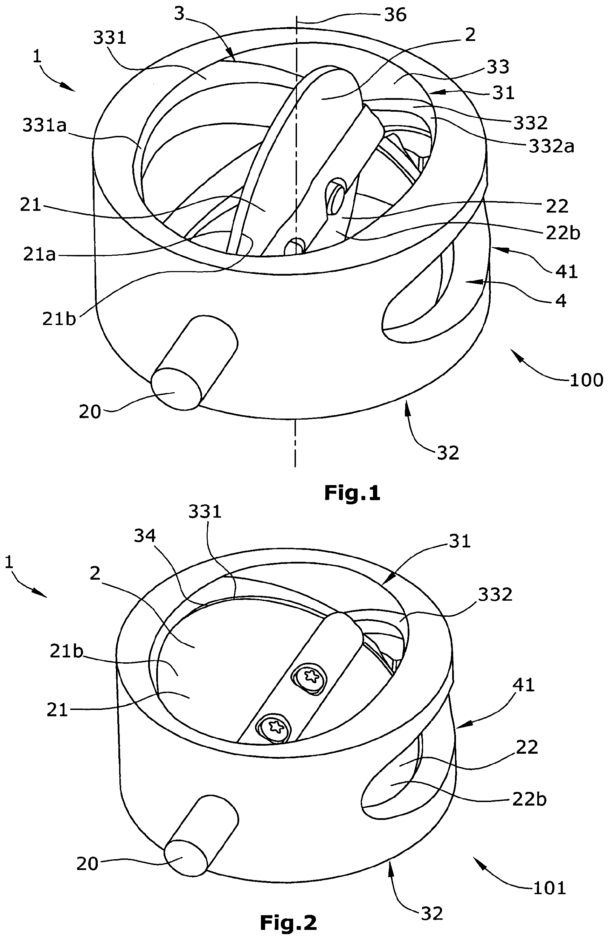

In den Figuren 1 bis 4 sind die erfindungsgemäßen unterschiedlichen Positionen (100, 101, 102) der Drosselklappe 2 in dem Hauptkanal 3 eines Drosselklappenstutzens 1 dargestellt. Selbstverständlich kann die Drosselklappe 2 auch in weitere Positionen einstellbar sein. Die Hauptströmungsrichtung in dem Hauptkanal 3 ist jeweils von der Einlassöffnung 31 zu der Auslassöffnung 32.

Die Drosselklappe 2 ist kreisrund, zylindrisch und plan ausgebildet und wird durch die Klappenwelle 20 in zwei gleich große Hälften 21, 22 geteilt. Die Hälften 21, 22 sind als eine in Richtung der Einlassöffnung 31 des Hauptkanals 3 angeordnete Drosselklappen-Oberhälfte 21 und eine in Richtung der Auslassöffnung 32 des Hauptkanals 3 angeordnete Drosselklappen-Unterhälfte 22 definiert. Die Drosselklappe 2 bzw. die Drosselklappen-Oberhälfte 21 und die Drosselklappen-Unterhälfte 22 weisen jeweils eine Frontseitenkante 21a, 22a und eine Rückseitenkante 21b, 22b auf. In einer Sperrposition 101, 102 liegt jeweils eine Frontseitenkante 21a, 22a und eine Rückseitenkante 21b, 22b an einem korrespondierenden Abschnitt der Drosselklappen-Anschlageinrichtung 331, 332 an. Insbesondere liegen in der ersten Sperrposition 101 die Frontseitenkante 21a und die Rückseitenkante 22b an einem Anschlagabschnitt 331a der ersten Drosselklappen-Anschlageinrichtung 331, und in der zweiten Sperrposition 102 die Frontseitenkante 22a und die Rückseitenkante 21b an einem Anschlagabschnitt 332a er zweiten Drosselklappen-Anschlageinrichtung 332 an. Die erste Drosselklappen-Anschlageinrichtung 331 und die zweite Drosselklappen-Anschlageinrichtung 332 bilden jeweils eine in der Innenwandfläche 33 des Hauptkanals 3 zur Mittellinie des Hauptkanals geneigt bzw. angewinkelt ausgebildete zylindrische Kontur 34, 35 aus. Die erste Drosselklappen-Anschlageinrichtung 331 bzw. die geneigte zylindrische Kontur 34 weist in diesem Beispiel die gleiche Form wie die gegenüberliegende zweite Drosselklappen-Anschlageinrichtung 332 bzw. geneigte zylindrische Kontur 35 auf. Die Drosselklappe 2 liegt mit ihren Seitenkanten 21a, 22a,

Die Einlassöffnung 31 bzw. der Einlasskanal sowie der in die Nebenkanalöffnung 41 führende Nebenkanal 4 können mit einem nicht dargestellten Abgasrückführsystem, einem Verdichter oder einem anderen Aggregat verbunden sein. Beispielsweise ist stromaufwärts der Einlassöffnung 31 ein Verdichter und stromaufwärts der Nebenkanalöffnung 41 ein Abgasrückführsystem angeordnet. Stromabwärts der Auslassöffnung 32 kann ein nicht dargestellter Verbrennungsmotor angeordnet sein.

In der Figur 1 befindet sich die Drosselklappe 2 in einer Offenposition 100, in der eine fluidische Verbindung zwischen der im Hauptkanal 3 stromaufwärts angeordneten Einlassöffnung 31, der innerhalb des Hauptkanals 3 angeordneten Nebenkanalöffnung 41 und der stromabwärts angeordneten Auslassöffnung 32 freigegeben ist. Dadurch kann die Auslassöffnung 32 bzw. der Auslaßkanal mit einem sowohl durch die Einlassöffnung 31 als auch durch die Nebenkanalöffnung 41 in den Hauptkanal 3 einströmenden Luftstrom beaufschlagt werden. Folglich kann in der Offen-Position 100 der Drosselklappe 2 ein maximaler Luftmassenstrom für den Auslasskanal bereitgestellt werden. Der Luftstrom aus der Einlassöffnung 31 kann dabei gegenüber dem Luftstrom aus der Nebenkanalöffnung 41 einen anderen Druck, eine andere Temperatur oder auch eine andere Geschwindigkeit aufweisen.

Durch ein Drehen der Drosselklappe 2 aus der Offenposition 100 in Richtung der ersten Sperrposition 101 oder in Richtung der zweiten Sperrposition 102 kann der vom Hauptkanal 3 durch die Auslassöffnung 32 ausströmende Luftstrom geregelt werden. Zudem kann der Luftstromanteil, der durch die Nebenkanalöffnung 41 in den Hauptkanal 3 und weiter in die Auslassöffnung 32 strömt, geregelt und geleitet werden.

In der Figur 2 ist die Drosselklappe 2 in einer die Auslassöffnung 32 verschließenden ersten Sperrposition 101 dargestellt. Die Drosselklappe 2 liegt mit der Frontseitenkante 21a der Drosselklappen-Oberhälfte 21 und mit der Rückseitenkante 22b der Drosselklappen-Unterhälfte 22 an der ersten Drosselklappen-Anschlageinrichtung 331 an. Dadurch sind beide Ansaugwege, das heißt sowohl die Nebenkanalöffnung 41 als auch die Einlassöffnung 31 verschlossen. Eine fluidische Verbindung zwischen der Auslassöffnung 32 und der Einlassöffnung 31 bzw. der Nebenkanalöffnung 41 ist somit unterbrochen.

Bei einer Verschaltung des Drosselklappenstutzens 1 in einem Ansaugsystem eines nicht dargestellten Verbrennungsmotors kann in der ersten Sperrposition 101 keine Luft in den Auslasskanal bzw. Ansaugkanal gelangen, so dass ein Nachlaufen des Verbrennungsmotors durch ungewolltes Zünden nach dem Abstellen des Verbrennungsmotors zuverlässig verhindert werden kann.

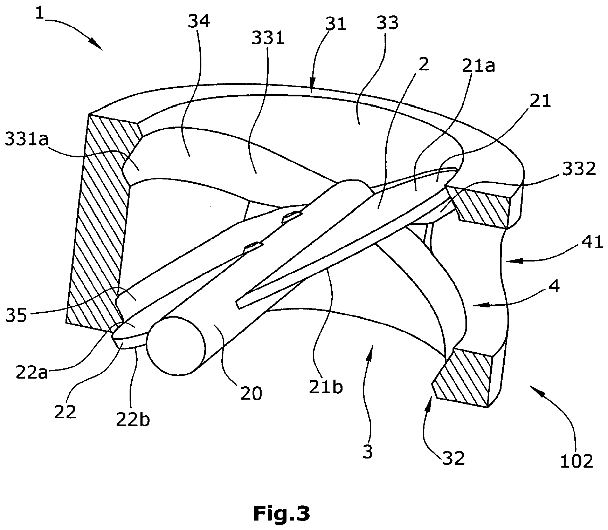

In der Figur 3 ist die Drosselklappe 2 in einer die Einlassöffnung 31 verschließenden zweiten Sperrposition 102 gezeigt. Die Drosselklappe 2 liegt hierbei mit ihren im Vergleich zur ersten Sperrposition 101 entgegengesetzten Seitenkanten 21b, 22a an der zweiten Drosselklappen-Anschlageinrichtung 332 an, diesmal jedoch stromabwärts der Nebenkanalöffnung 41. Insbesondere liegt die Drosselklappe 2 mit der Frontseitenkante 22a der Drosselklappen-Unterhälfte 22 und mit der Rückseitenkante 21b der Drosselklappen-Oberhälfte 21 an der zweiten Drosselklappen-Anschlageinrichtung 332 an.

In der zweiten Sperrposition 102 ist die Einlassöffnung 31 vollständig verschlossen, so dass eine fluidische Verbindung zwischen der Einlassöffnung 31 und der Auslassöffnung 32 unterbrochen ist. Jedoch wird eine fluidische Verbindung zwischen der Auslassöffnung 32 und der Nebenkanalöffnung 41 frei gegeben. Die Drosselklappen-Oberhälfte 21 liegt in dieser Stellung stromaufwärts der Nebenkanalöffnung 41 mit einer Rückseitenkante 21b an der Drosselklappen-Anschlageinrichtung 332 an. Der Winkel der Drosselklappe 2 in dieser zweiten Sperrposition 102 zu einer Mittellinie 36 des Hauptkanals 3 ist etwa 5° kleiner als der Winkel einer verlängerten Mittelachse der Nebenkanalöffnung 41 zur Mittellinie 36 des Hauptkanals 3. Die Drosselklappe 2 ist somit von der Nebenkanalöffnung 41 in Richtung der Einlassöffnung 31 geneigt und verlängert einen radial äußeren Wandabschnitt der Nebenkanalöffnung 41, wobei die Strömung aus dem Nebenkanal 4 allmählich in Richtung der Auslassöffnung 32 und somit in den Auslasskanal umgelenkt wird. Da durch die Lage der Drosselklappe 2 zusätzlich für Wirbel zur Verfügung stehende stromabwärtige Toträume ummittelbar hinter der Nebenkanalöffnung 41 weitestgehend vermieden werden, entsteht lediglich ein sehr geringer Druckverlust.

Bei einer Verschaltung des Drosselklappenstutzens 1 in einem Ansaugsystem eines nicht dargestellten Verbrennungsmotors wird diese Stellung angefahren, wenn ein Luftstrom lediglich von der Nebenkanalöffnung 41 in Richtung der Auslasskanalöffnung 32 geleitet werden soll, beispielsweise zur reinen Abgasrückführung.

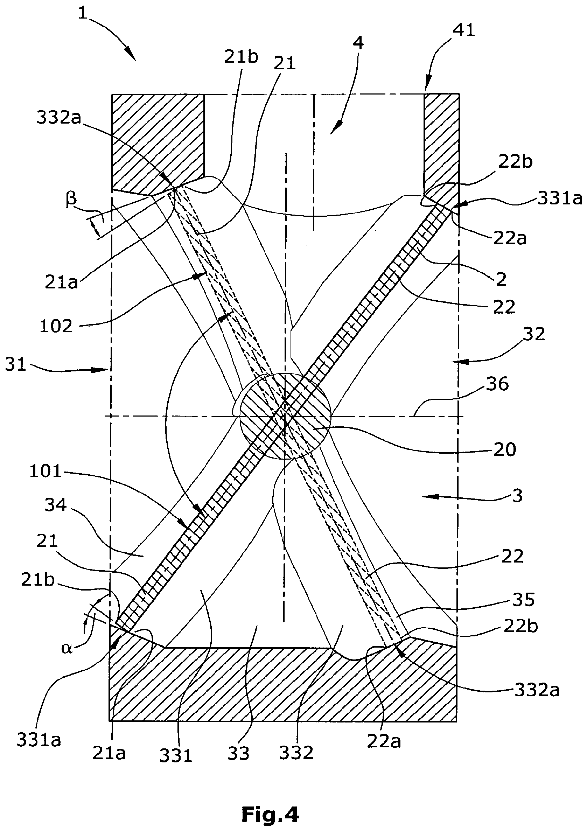

In der Figur 4 ist der Drosselklappenstutzen 1 mit der Drosselklappe 2 in der ersten und in der zweiten Sperrposition 101, 102 in einer Schnittdarstellung gezeigt.

Durch die erfindungsgemäße Ausführung der Kontur 34, 35 der Innenwandfläche 33 kommen bei der Verwendung einer kreisrunden und planen Drosselklappe 2 jeweils in einer Sperrposition, eine der beiden Frontseitenkanten 21a, 22a und eine der beiden Rückseitenkanten 21b, 22b der Drosselklappenhälften 21, 22 mit der Innenwandfläche 33 des Hauptkanals 3 in Anlage.

Diese Anlage erfolgt dabei (siehe Figur 4) in der ersten Sperrposition 101 unter einem bestimmten kleinen Anstellwinkel α zwischen der Kontur 34 und der zylindrischen Achse der Drosselklappe 2. Auf diese Weise liegt die Drosselklappe 2 derart an der ersten Drosselklappen-Anschlageinrichtung 331 an, dass der Leckluftspalt minimiert werden kann.

In der zweiten Sperrposition 102 erfolgt die Anlage der Drosselklappe 2 unter einem bestimmten größeren Anstellwinkel β zwischen der Kontur 35 und der zylindrischen Achse der Drosselklappe 2. Ab einem bestimmten Anstellwinkel β ermöglicht die zylindrische kreisrunde Drosselklappe 2 in dieser Sperrposition 102 mit den größeren Toleranzen mit ihren jeweiligen Kanten 21b, 22a an der zweiten Drosselklappen-Anschlageinrichtung 332 eine klemm- und verbeissfreie Anlage. In dieser Sperrposition kann ein größerer Leckluftspalt zwischen der Drosselklappe 2 und der zweiten Drosselklappen-Anschlageinrichtung 332 vorliegen.

In der Schnittdarstellung gemäß Figur 4 ist deutlich die Anstellung der Drosselklappe 2 in der ersten Sperrposition 101 unter dem Winkel α in Bezug auf die zylindrischen Achse der Drosselklappe 2 und in der zweiten Sperrposition 102 unter dem Winkel β in Bezug auf die zylindrischen Achse der Drosselklappe 2 zu erkennen.

Gemäß Schnittdarstellung in Figur 4 verläuft die erste geneigte zylindrische Kontur 34 der Innenwandfläche 33 bzw. die erste Drosselklappen-Anschlageinrichtung 331 unter einem bestimmten gekippten Winkel in Bezug auf die Lotrechte, die zweite geneigte zylindrische Kontur 35 bzw. die zweite Drosselklappen-Anschlageinrichtung 332 unter einem anderen Winkel in Bezug auf die Lotrechte. Diese beiden Winkel können gleich groß sein, sollte das Anströmverhalten des Fluids durch die Klappe bzw. das Aufmaß der mechanischen Bearbeitung keine bzw. nur eine untergeordnete Rolle spielen.

Die Bearbeitung des Hauptkanals 3 kann auf bekannte Weise durch eine Spindel oder Fräsbearbeitung erfolgen. In bestimmten Anwendungsfällen kann es gewünscht sein, den Leckluftdurchsatz in der Leerlaufposition oder in der leerlaufnahen Position, also in der Sperrposition 101, 102 oder in der Nähe der Sperrposition 101, 102 der Drosselklappe 2 noch weiter zu minimieren. Hierzu kann der Anschlagabschnitt 34, 35 der Drosselklappen-Anschlageinrichtung 331, 332 durch plastische Verformung nach Energiezufuhr den jeweiligen Frontseitenkanten 21a, 22a und/oder Rückseitenkanten 21b, 22b der Drosselklappe 2 angepasst sein. Dabei kann die Drosselklappe 2 durch Drehen der Welle mit vorgegebenem Drehmoment in Richtung einer Sperrposition auch "zum Eingraben" gebracht werden.

Der erfindungsgemäße Drosselklappenstutzen verbindet entsprechend verschiedene Funktionen unterschiedlicher in bekannten Verbrennungsmotoren angeordneter Drosselklappensysteme in nur einer einzigen Drosselklappe Beispielsweise verbindet der Drosselklappenstutzen die Funktionen einer Regelklappe zur Luftregelung und zur Spülgefälleregelung in einem Ansaugkanal, einer Nebenkanalklappe zur eingangsseitigen oder ausgangsseitigen Verschaltung eines Nebenkanals mit dem Hauptkanal sowie einer dichten Schließklappe zum Verschließen der Eingangsöffnung oder der Ausgangsöffnung, beispielsweise zum Verhindern eines Nachlaufens des Verbrennungsmotors. Entsprechend entsteht ein Aufbau mit einer verringerten Anzahl an Bauteilen, wodurch der Herstellungsaufwand und der Montageaufwand reduziert werden.

### Referenzliste

- 1: Drosselklappenstutzen
- 2: Drosselklappe
- 20: Drosselklappenwelle
- 21: Drosselklappen-Oberhälfte
- 21a: Frontseitenkante
- 21b: Rückseitenkante
- 22: Drosselklappen-Unterhälfte
- 22a: Frontseitenkante
- 22b: Rückseitenkante
- 3: Hauptkanal
- 31: Einlassöffnung
- 32: Auslassöffnung
- 33: Innenwandfläche
- 331: erste Drosselklappen-Anschlageinrichtung
- 331a: Einlass-Anschlagabschnitt
- 332: zweite Drosselklappen-Anschlageinrichtung
- 332b: Auslass-Anschlagabschnitt
- 34: geneigte zylindrische Kontur
- 35: geneigte zylindrische Kontur
- 36: Mittellinie des Hauptkanals, Hauptkanalneutrale
- 4: Nebenkanal
- 41: Nebenkanalöffnung
- 5: Nebenkanal
- 51: Nebenkanalöffnung

- 100: Offenposition
- 101: erste Sperrposition
- 102: zweite Sperrposition

## Patentansprüche

1. Drosselklappenstutzen (1) für eine Brennkraftmaschine mit einem Hauptkanal (3), der eine Einlassöffnung (31) und eine Auslassöffnung (32) aufweist,
einer Drosselklappe (2), die zentrisch mit einer in dem Hauptkanal (3) drehbar gelagerten Drosselklappenwelle (20) verbunden ist, so dass eine Prosselklappen-Oberhälfte (21) und eine Drosselklappen-Unterhälfte (22) definiert sind, und
einer ersten Drosselklappen-Anschlageinrichtung (331), die an einer Innenwandfläche (33) des Hauptkanals (3) ausgebildet ist, und an der in einer ersten die Auslassöffnung (32) verschließenden Sperrposition (101) die Drosselklappen-Oberhälfte (21) mit einer Frontseitenkante (21a) und die Drosselklappen-Unterhälfte (22) mit einer Rückseitenkante (22b) anliegen,
wobei an der Innenwandfläche (33) des Hauptkanals (3) eine zweite Drosselklappen-Anschlageinrichtung (332) ausgebildet ist, an der in einer zweiten die Einlassöffnung (31) verschließenden Sperrposition (102) die Drosselklappen-Oberhälfte (21) mit einer Rückseitenkante (21b) und die Drosselklappen-Unterhälfte (22) mit einer Frontseitenkante (22a) anliegen,
**dadurch gekennzeichnet, dass**
die Drosselklappen-Anschlageinrichtung (331, 332) jeweils eine zylindrische Kontur (34, 35) aufweist, die derart ausgebildet ist, dass die Drosselklappe (2) in Richtung einer Sperrposition (101, 102) berührungsfrei entlang der Kontur (34, 35) drehbar ist und in der Sperrposition (101, 102) mit zumindest einer Kante (21a, 21b, 22a, 22b) an einem Anschlagabschnitt (331a, 332b) der Kontur (34, 35) anliegt.

2. Drosselklappenstutzen (1) nach Anspruch 1, **dadurch gekennzeichnet, dass** der Hauptkanal (3) eine Nebenkanalöffnung (41) aufweist, durch die ein Nebenkanal (4) in den Hauptkanal (3) mündet.

3. Drosselklappenstutzen (1) nach Anspruch 2, **dadurch gekennzeichnet, dass** die Nebenkanalöffnung (41) in einem Seitenbereich des Hauptkanals (3) zwischen der ersten Drosselklappen-Anschlageinrichtung (331) und der zweiten Drosselklappen-Anschlageinrichtung (332) ausgebildet ist.

4. Drosselklappenstutzen (1) nach einem der Ansprüche 2 oder 3, **dadurch gekennzeichnet, dass** die Nebenkanalöffnung (41) in der ersten Sperrposition (101) gegenüber der Auslassöffnung (32) absperrbar und gegenüber der Einlassöffnung (31) freigebbar und in der zweiten Sperrposition (102) gegenüber der Einlassöffnung (31) absperrbar und gegenüber der Auslassöffnung (32) freigebbar ist.

5. Drosselklappenstutzen (1) nach einem der Ansprüche 2 bis 4, **dadurch gekennzeichnet, dass** die Nebenkanalöffnung (41) oval ausgebildet ist.

6. Drosselklappenstutzen (1) nach einem der voranstehenden Ansprüche, **dadurch gekennzeichnet, dass** die Einlassöffnung (31) in der ersten Sperrposition (101) und in der zweiten Sperrposition (102) gegenüber der Auslassöffnung (32) absperrbar ist.

7. Drosselklappenstutzen (1) nach einem der voranstehenden Ansprüche, **dadurch gekennzeichnet, dass** die Drosselklappe (2) in einer Offenposition (100) auf einer Mittellinie (36) der Innenwandfläche (33) des Hauptkanals (3) angeordnet ist.

8. Drosselklappenstutzen (1) nach einem der voranstehenden Ansprüche, **dadurch gekennzeichnet, dass** die Drosselklappe (2) kreisrund, zylindrisch und/oder plan ausgebildet ist.

9. Drosselklappenstutzen (1) nach einem der voranstehenden Ansprüche, **dadurch gekennzeichnet, dass** die Drosselklappe (2) in einem Radius von 120° drehbar ist.

10. Drosselklappenstutzen (1) nach einem der voranstehenden Ansprüche, **dadurch gekennzeichnet, dass** die Drosselklappe (2) in einer erste Richtung in die erste Sperrposition (101) und in einer entgegengesetzten zweiten Richtung in die zweite Sperrposition (102) drehbar ist.

11. Drosselklappenstutzen (1) nach einem der voranstehenden Ansprüche, **dadurch gekennzeichnet, dass** die Drosselklappe (2) in einer Teiloffenposition und/oder in der Sperrposition (101, 102) unter einem Winkel in Bezug auf eine Mittelline (36) der Innenwandfläche (33) des Hauptkanals (3) angestellt ist.

12. Drosselklappenstutzen (1) nach einem der voranstehenden Ansprüche, **dadurch gekennzeichnet, dass** die Drosselklappen-Anschlageinrichtung (331, 332) unter einem Winkel in Bezug auf eine Mittellinie (36) der Innenwandfläche (33) des Hauptkanals. (3) ausgebildet ist.

13. Drosselklappenstutzen (1) nach einem der voranstehenden Ansprüche, **dadurch gekennzeichnet, dass** ein Anschlagabschnitt der Drosselklappen-Anschlageinrichtung (331, 332) zu der Seitenkante (21a, 21b, 22a, 22b) der Drosselkappe (2) korrespondiert.

14. Drosselklappenstutzen (1) nach einem der voranstehenden Ansprüche, **dadurch gekennzeichnet, dass** die in Hauptkanalrichtung verlaufende Mittellinie (36) eine Gerade ist, wobei der Mittelpunkt der Drosselklappe (2) auf dieser Geraden liegt.

15. Verfahren zur Regelung einer Drosselklappe in einem Drosselklappenstutzen (1) einer Brennkraftmaschine nach einem der voranstehenden Ansprüche, **dadurch gekennzeichnet, dass**
- bei Abschalten der Brennkraftmaschine die Drosselklappe (2) zur Unterbrechung eines ersten Luftstroms in die erste Sperrposition (101) gedreht wird, so dass die Auslassöffnung (32) vollständig verschlossen wird und eine Fluidströmung von der Einlassöffnung (31) zu der Nebenkanalöffnung (41) freigegeben wird,
- bei Schaltung der Brennkraftmaschine in eine Halbschub-Position die Drosselklappe (2) zur Weiterleitung eines zweiten Luftstroms in die zweite Sperrposition (102) gedreht wird, so dass die Einlassöffnung (31) verschlossen wird und eine Fluidströmung von der Nebenkanalöffnung (41) zu der Auslassöffnung (32) freigegeben wird, und
- bei Schaltung der der Brennkraftmaschine in eine Vollschub-Position die Drosselklappe (2) zur Weiterleitung des ersten Luftstroms und des zweiten Luftstroms in die Offenposition (100) gedreht wird, so dass eine Fluidströmung von der Einlassöffnung (31) und von der Nebenkanalöffnung (41) zu der Auslassöffnung (32) freigegeben wird,
- wobei die Drosselklappe (2) beim Drehen in Richtung einer Sperrposition (101, 102) berührungsfrei entlang einer Zylindrischen Kontur (34, 35) bewegt wird und in der Sperrposition (101, 102) mit zumindest einer Kante (21a, 21b, 22a, 22b) an einem Anschlagabschnitt (331a, 332b) der Kontur (34, 35) anliegt.

## Claims

1. Throttle valve connector (1) for an internal combustion engine, comprising
a primary channel (3) which has an inlet opening (31) and an outlet opening (32),
a throttle valve (2) which is centrically connected to a throttle valve shaft (20) that is rotatably supported in the primary channel (3) such that a throttle valve upper half (21) and a throttle valve lower half (22) are defined, and
a first throttle valve stop device (331) which is formed on an inner wall surface (33) of the primary channel (3) and against which a front face edge (21a) of the throttle valve upper half (21) and a rear face edge (22b) of the throttle valve lower half (22) rest in a first blocking position (101) that closes the outlet opening (32),
wherein the inner wall surface (33) of the primary channel (3) is formed with a second throttle valve stop means (332), against which a rear face edge (21b) of the throttle valve upper half (21) and a front face edge (22a) of the throttle valve lower half (22) rest in a second blocking position (102) that closes the inlet opening (31),
**characterized in that**
the throttle valve stop means (331, 332) each have a cylindrical contour (34, 35) designed such that the throttle valve (2) is adapted to be turned in a contactless manner along the contour (34, 35) towards a blocking position (101, 102) and, in the blocking position (101, 102), rests on a stop section (331a, 332b) of the contour (34, 35) by at least one edge (21a, 21b, 22a, 22b).

2. Throttle valve connector (1) of claim 1, **characterized in that** the primary channel (3) has a secondary channel opening (41) through which a secondary channel (4) opens into the primary channel (3).

3. Throttle valve connector (1) of claim 2, **characterized in that** the secondary channel opening (41) is formed in a lateral portion of the primary channel (3) between the first throttle valve stop means (331) and the second throttle valve stop means (332).

4. Throttle valve connector (1) of one of claims 2 or 3, **characterized in that**, in the first blocking position (101), the secondary channel opening (41) can be blocked with respect to the outlet opening (32) and can be cleared with respect to the inlet opening (31), while, in the second blocking position (102), it can be blocked with respect to the inlet opening (31) and can be cleared with respect to the outlet opening (32).

5. Throttle valve connector (1) of one of claims 2 to 4, **characterized in that** the secondary channel opening (41) is oval in shape.

6. Throttle valve connector (1) of one of the preceding claims, **characterized in that**, in the first blocking position (101) and the second blocking position (102) the inlet opening (31) can be blocked with respect to the outlet opening (32).

7. Throttle valve connector (1) of one of the preceding claims, **characterized in that**, in an open position (100), the throttle valve (2) is arranged on a centre line (36) of the inner wall surface (33) of the primary channel (3).

8. Throttle valve connector (1) of one of the preceding claims, **characterized in that** the throttle valve (2) is of a circular, cylindrical and/or planar design.

9. Throttle valve connector (1) of one of the preceding claims, **characterized in that** the throttle valve (2) can be turned through a radius of 120°.

10. Throttle valve connector (1) of one of the preceding claims, **characterized in that** that the throttle valve (2) can be turned to the first blocking position (101) in a first direction and to the second blocking position (102) in an opposite second direction.

11. Throttle valve connector (1) of one of the preceding claims, **characterized in that**, in a partially open position and/or in the blocking position (101, 102), the throttle valve (2) is set under an angle with respect to a centre line (36) of the inner wall surface (33) of the primary channel (3).

12. Throttle valve connector (1) of one of the preceding claims, **characterized in that** the throttle valve stop means (331, 332) is formed under an angle with respect to the centre line (36) of the inner wall surface (33) of the primary channel (3).

13. Throttle valve connector (1) of one of the preceding claims, **characterized in that** a stop section of the throttle valve stop means (331, 332) corresponds with the face edge (21a, 21b, 22a, 22b).

14. Throttle valve connector (1) of one of the preceding claims, **characterized in that** the centre line (36) extending in the direction of the primary channel is a straight line, the centre of the throttle valve (2) being located on this straight line.

15. Method for regulating a throttle valve in a throttle valve connector (1) of an internal combustion engine of one of the preceding claims, **characterized in that**
- upon a deactivation of the internal combustion engine, the throttle valve (2) is turned into the first blocking position (101) to interrupt a first air flow so that the outlet opening (32) is closed completely and a fluid flow is enabled from the inlet opening (31) to the secondary channel opening (41),
- when the internal combustion engine is switched to a half-thrust position, the throttle valve (2) is turned to the second blocking position (102) to direct a second air flow so that the inlet opening (31) is closed and a fluid flow is enabled from the secondary channel opening (41) to the outlet opening (32), and
- when the internal combustion engine is switched to a full-thrust position, the throttle valve (2) is turned into the open position to direct the first air flow and the second air flow so that a fluid flow is enabled both from the inlet opening (31) and from the secondary channel opening (41) to the outlet opening (32),
- wherein the throttle valve (2), when being turned, is moved in a contactless manner along the contour (34, 35) towards a blocking position (101, 102) and, in the blocking position (101, 102), rests on a stop section (331a, 332b) of the contour (34, 35) by at least one edge (21a, 21b, 22a, 22b).

## Revendications

1. Tubulure de papillon (1) pour un moteur à combustion interne, comprenant
un canal principal (3) avec une ouverture d'admission (31) et une ouverture de décharge (32),
un papillon (2) lié de manière centrique avec un arbre de papillon (20) supporté de manière rotative dans ledit canal principal (3), de sorte qu'un moitié de papillon supérieure (21) et une moitié de papillon inférieure (22) soient définies, et
un premier moyen de butée de papillon (331) formé sur un surface de paroi intérieure (33) du canal principal (3), et sur lequel restent, dans une première position de blocage (101) fermant l'ouverture de décharge (32), la moitié de papillon supérieure (21) par un bord de face frontale (21a) et la moitié de papillon inférieure (22) par un bord de face arrière (22b),
un deuxième moyen de butée de papillon (332) étant formé sur une surface de paroi intérieure (33) du canal principal (3), et sur lequel restent, dans une deuxième position de blocage (102) fermant l'ouverture d'admission (31), la moitié de papillon supérieure (21) par un bord de face arrière (21b) et la moitié de papillon inférieure (22) par un bord de face frontale (22a),
**caractérisée en ce que**
le moyen de butée de papillon (331, 332) présent un contour cylindrique (34, 35) respectif, formé d'une manière que le papillon (2) peut être tourné sans contact vers une position de blocage (101, 102) le long du contour (34, 35) et, dans la position de blocage (101, 102) reste sur un moyen de butée de papillon (331, 332) du contour (34, 35) par au moins un bord (21a, 21b, 22a, 22b).

2. Tubulure de papillon (1) selon la revendication 1, **caractérisée en ce que** le canal principal (3) comprend une ouverture de canal secondaire (41) par laquelle un canal secondaire (4) s'ouvre dans le canal principal (3).

3. Tubulure de papillon (1) selon la revendication 2, **caractérisée en ce que** l'ouverture de canal secondaire (41) est formée dans une région latérale du canal principal (3) entre le premier moyen de butée de papillon (331) et le deuxième moyen de butée de papillon (332).

4. Tubulure de papillon (1) selon l'une des revendications 2 ou 3, **caractérisée en ce que** l'ouverture de canal secondaire (41), dans la première position de blocage (101), peut être bloquée par rapport à l'ouverture de décharge (32) et peut être libérée par rapport à l'ouverture d'admission (31) et, dans la deuxième position de blocage (102), peut être bloquée par rapport à l'ouverture d'admission (31) et peut être libérée par rapport à l'ouverture de décharge (32).

5. Tubulure de papillon (1) selon l'une quelconque des revendications 2 à 4, **caractérisée en ce que** l'ouverture de canal secondaire (41) est de forme ovale.

6. Tubulure de papillon (1) selon l'une quelconque des revendications précédentes, **caractérisée en ce que** l'ouverture d'admission (31) peut être bloquée par rapport à l'ouverture de décharge (32) dans la première position de blocage (101) et dans la deuxième position de blocage (102).

7. Tubulure de papillon (1) selon l'une quelconque des revendications précédentes, **caractérisée en ce que**, dans une position ouverte (100), le papil-Ion (2) est disposé sur une ligne médiane (36) de la surface de paroi intérieure (33) du canal principal (3).

8. Tubulure de papillon (1) selon l'une quelconque des revendications précédentes, **caractérisée en ce que** le papillon (2) est de forme circulaire, cylindrique et/ou plane.

9. Tubulure de papillon (1) selon l'une quelconque des revendications précédentes, **caractérisée en ce que** le papillon (2) peut être tourné dans un rayon de 120°.

10. Tubulure de papillon (1) selon l'une quelconque des revendications précédentes, **caractérisée en ce que** le papillon (2) peut être tourné dans un premier sens vers la première position de blocage (101) et dans un deuxième sens opposé vers la deuxième position de blocage (102).

11. Tubulure de papillon (1) selon l'une quelconque des revendications précédentes, **caractérisée en ce que**, dans une position partiellement ouverte et/ou dans la position de blocage (101, 102), le papillon (2) forme un angle par rapport à une ligne médiane (36) de la surface de paroi intérieure (33) du canal principal (3).

12. Tubulure de papillon (1) selon l'une quelconque des revendications précédentes, **caractérisée en ce que** le moyen de butée de papillon (331, 332) forme un angle par rapport à une ligne médiane (36) de la surface de paroi intérieure (33) du canal principal (3).

13. Tubulure de papillon (1) selon l'une quelconque des revendications précédentes, **caractérisée en ce qu'**une section de butée du moyen de butée de papillon (331, 332) correspond au bord latéral (21, 21b, 22a, 22b) du papillon (2).

14. Tubulure de papillon (1) selon l'une quelconque des revendications précédentes, **caractérisée en ce que** la ligne médiane (36) s'étendant dans la direction du canal principal est une ligne droite, le centre du papillon (2) étant situé sur cette ligne droite.

15. Procédé de commande d*un papillon dans une tubulure de papillon (1) d'un moteur à combustion interne selon l'une quelconque des revendications précédentes, **caractérisé en ce que**
- lors d'une désactivation du moteur à combustion interne, le papillon (2) est tourné dans première position de blocage (101) pour interrompre un premier courant d'air, de sorte que l'ouverture de décharge (32) soit complètement fermée et un courant de fluide soit libéré pour s'écouler de l'ouverture d'admission (31) vers l'ouverture de canal secondaire (41),
- lors d'une commutation du moteur à combustion interne dans une position semi-poussée, le papillon (2) est tourné dans la deuxième position de blocage (102) pour le passage d'un deuxième courant d'air, de sorte que l'ouverture d'admission (31) soit fermée et un courant de fluide soit libéré pour s'écouler de l'ouverture de canal secondaire (41) vers l'ouverture de décharge (32), et
- lors d'une commutation du moteur à combustion interne dans une position de poussée maximale, le papillon (2) est tourné dans la position ouverte (100) pour le passage du premier courant d'air et du deuxième courant d'air, de sorte qu'un courant de fluide soit libéré pour s'écouler de l'ouverture d'admission (31) et de l'ouverture de canal secondaire (41) vers l'ouverture de décharge (32),
- lorsque l'on tourne le papillon (2) vers une position de blocage (101, 102), le papillon est déplacé sans contact le long d'un contour (34, 35) cylindrique et, dans la position de blocage (101, 102), reste sur une section de butée (331a, 332b) du contour (34, 35) par au moins un bord (21a, 21b, 22a, 22b).
